# EUROPEAN PATENT SPECIFICATION

(11) **EP 0 960 249 B1**
(45) Date of publication and mention of the grant of the patent: **20.10.2004**
(21) Application number: 98900877.6
(22) Date of filing: 21.01.1998
(51) Int. Cl.: E06B 1/06, H02G 3/30, F16L 3/26

(54) **CABLE GUIDE**
KABELFÜHRUNG
GUIDE-CABLE

(30) Priority: 24.01.1997 FI 970289
(43) Date of publication of application: 01.12.1999
(73) Proprietor: Nokia Corporation, 02150 Espoo (FI)
(72) Inventor: NENONEN, Ville, FIN-00530 Helsinki (FI); NISSINEN, Timo, FIN-00710 Helsinki (FI)
(74) Representative: Ruuskanen, Juha-Pekka
(86) International application number: PCT/FI1998/000045
(87) International publication number: WO 1998/032941

(56) References cited:
- FI-B- 93 158
- GB-A- 1 178 593
- GB-A- 2 243 027
- US-A- 4 796 865
- US-A- 5 007 605
- US-A- 5 183 237
- US-B- 5 007 605

## Description

### Field of application of the invention

This invention concerns a cable guide intended for telecommunication cables and consisting of a guide part and of at least one fastening means for fastening the cable guide to a base.

### Background of the invention

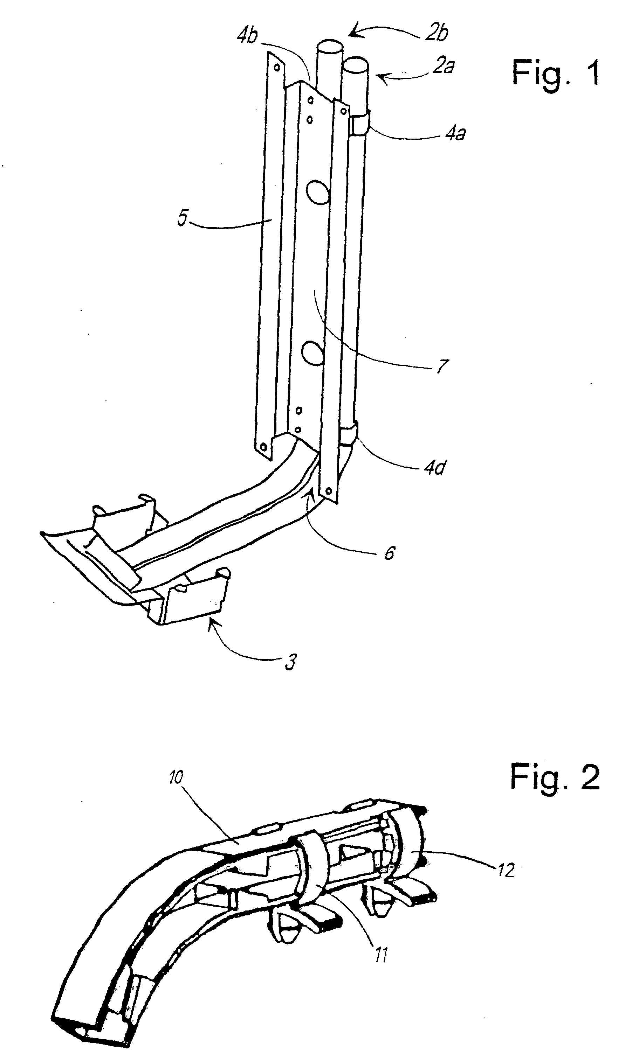

When mounting telecommunication cables, the cable must often be bent, forming numerous bends. Cable manufacturers define such minimum values for the bending radius which the cables will withstand. Damages to the cable and transfer errors in signals will easily result if the installation falls short of these minimum values. The optical fiber in particular may break due to the susceptible flexibility of the fiber. In free mounting of cables, such as when fastening the cable to the device housing with bundle ties, it is difficult to determine the bending radius of the mounted cable. An arrangement ensuring a sufficient bending radius for optical fibers is presented in patent publication FI-93158. The arrangement for guiding the optical fiber which is presented in the publication and which is shown in Figure 1 of the attached drawing, consists of a tubular cable guide 2a, a support plate 5 for fastening to the device frame, fastening means 4a - 4d for fastening the tubular cable guide to the support plate and a fiber guide 3, which is attached to a plane at right angles to the fastening plane of support plate 5, e.g. to the bottom of the device housing. Optical fibers are conveyed in the tubular guide, which is bent so that the bending radius of bend 6 is bigger than or equal to the minimum bending radius of the optical fiber. The bending radius of cable guide 2a is controlled by the distance between surface 7 and the fastening plane of support plate 5. The arrangement according to the publication allows short fiber cable installation times. However, the firmness of the cable mounting is a problem with the arrangement presented above. In connection e.g. with device maintenance, the cable mounting and guide arrangement must be disassembled not to interfere with the work. The arrangement must also be disassembled for moving cables to run in a new direction. In addition, troublesome fastening of the arrangement to the device housing is another problem. Support plate 5 and fiber guide 3 must be attached separately, e.g. with screws, in their correct positions in the device housing.

US Patent No. 5,007,605 discloses an apparatus for suspending hoses or cables which consists of an elongate support having a support surface in the shape of an arch with a vertex, depending haunches and intrados. A hose or cable may be supported upon the vertex and haunches of the arch. There is also a strap secured transversely to the support. Loops or rings are provided for attaching the strap to a suspension line. The supporting configuration of US 5,007,605 limits the extent to which the hose or cable will be bent to a controlled radius, selected with a view to minimizing the risk of damage due to crimping.

### Brief description of the invention

The purpose of the present invention is to allow easy and quick mounting of the cable ensuring a sufficient bending radius and easy changing of the mounting direction of the mounted cable without having to disassemble the fastening.

These objectives are achieved with a cable guide which consists of a guide part and of fastening means for fastening the cable guide to a base, wherein the guide part consists of a straight part and of a curved part, the radius of curvature of which is bigger than or equal to the minimum bending radius of the cable, and the guide part, supported by the fastening means, is arranged to be rotatable in relation to the longitudinal axis of the straight part. The cable guide according to the invention is characterized in that the guide part is pre-cast and that the fastening means are mounted on the straight part and that there are locking means in the cable guide to lock any rotation of the guide part.

The invention is based on the idea that the cable guide may be rotated in relation to its longitudinal axis, whereby cables can be guided to pass in the desired direction. The pre-cast guide part in the cable guide protects the cable and keeps the cable bending radius at least equal to the minimum bending radius. The invention is further based on the idea that the cable guide can be quickly and easily installed in the device frame thanks to the snap connection of the fastening means.

It is an advantage of such a cable guide that the cable mounting direction can be changed without opening any mountings, however, at the same time maintaining a safe bending radius for the cable. The structure of the cable is simple and it protects the cable.

Another advantage achieved with the cable guide is that fastening of both the cable and the cable guide is easy and quick. The cable guide can be mounted to plates of different thickness and with different hole patterns.

### List of figures

The invention will now be described in greater detail referring to the attached drawings, wherein:
- Figure 1: shows a known arrangement for guiding an optical fiber;
- Figure 2: shows the structure of the cable guide according to the invention;
- Figure 3: shows the parts of the cable guide according to the invention;
- Figure 4: shows the structure of the guide part of the cable guide according to the invention;
- Figure 5: shows the guide part of the cable guide according to the invention as seen from the cable aperture located on one side;
- Figure 6: shows a cross-section of the guide part along line A-A in Figure 5;
- Figure 7: shows the structure of the fastening means of the cable guide according to the invention as seen from the cable conveyance direction; and
- Figure 8: is a perspective view of the structure of the fastening means of the cable guide according to the invention.

### Detailed description of the invention

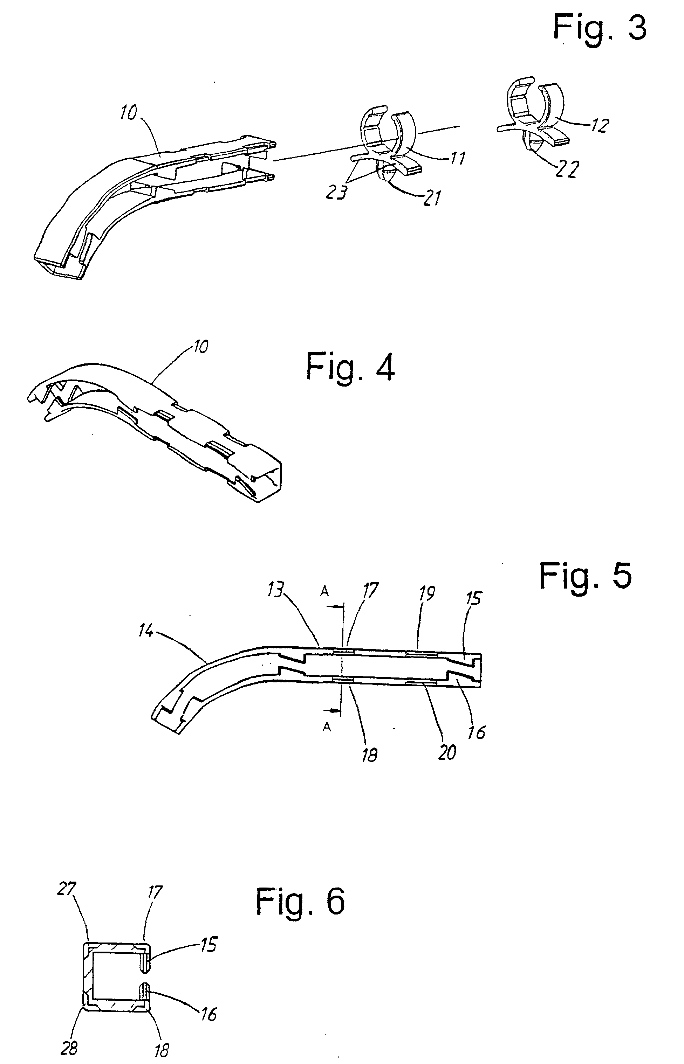

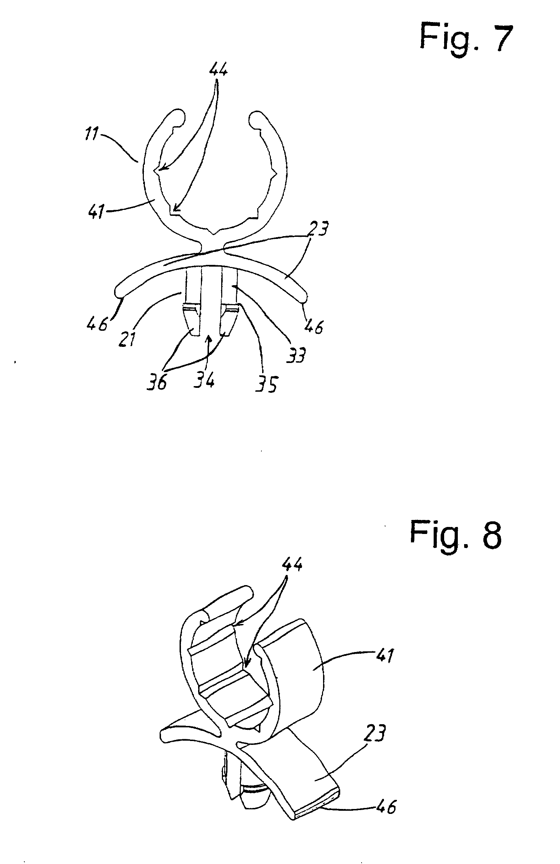

Figure 2 shows a cable guide according to the invention comprising a guide part 10 and two fastening means 11 and 12. Figure 3 illustrates how the cable guide is put together by placing fastening means 11 and 12 around guide part 10. The cable guide is mounted with the aid of snap connectors 21 and 22, which are known as such and are located on the bottom side of fastening means 11 and 12, into the device frame e.g. into a perforated plate or holes bored into a fastening base. The flexible pressing vanes of the fastening means curve downwards and allow firm fastening on fastening bases of varying thickness, such as is presented later in connection with Figure 7. The cables are placed in the cable guide e.g. through a gap in one side of guide part 10 or from one end of the guide part by slipping it through, while the guide part is closed along all its sides. Several cables can be placed in the same cable guide when required.

Guide part 10 in the cable guide can be rotated freely inside the fastening means e.g. so that the guide part is placed to curve downwards, as shown in Figure 2. When placing cables through the gap in one side of the cable guide, the guide part will of course be turned so that the gap shown in Figure 2 in one side of the guide part will face upwards in the same direction as the aperture of fasteners surrounding the guide part of fastening means 11 and 12. The installation direction of the installed cable guide and thus of cables is changed by rotating guide part 10 to curve in the desired direction. Thus e.g. in connection with device maintenance or another mounting, any cables obstructing the work can be guided temporarily to run in another direction. If cable routes must be changed after the first installation, the cable guide according to the invention allows quick and easy turning of the cable curving direction. The whole cable guide can also be removed together with its cables from its fastening base and the whole unit can be installed quickly and effortlessly in its new location owing to the snap connections of fastening means 11 and 12.

Figure 4 is a perspective view of the structure of guide part 10. As is shown in the figure, guide part 10 is preferably cast as an integral structure without any separate connection points.

Figure 5 shows guide part 10 seen from the open side shown in Figure 4 so that this opening allowing cables to be slipped through is fully visible. The guide part is formed of a straight part 13 and of a curved part 14. The radius of curvature of curved part 14 is cast to suit each purpose of use separately. The radius of curvature is chosen on the basis of the minimum bending radius of the cables to be installed so that the radius of curvature is at least equal to the minimum bending radius. The usability of the cable to be installed is hereby ensured when excessive bending of the cable is avoided.

In Figure 5 the open side of the guide part is provided with chamfered tongues 15 and 16 located on the longitudinal edges of the side and essentially matched together on opposite sides. Between the oppositely directed tongues 15 and 16 there is a gap, which is essentially of uniform width and which is chamfered in relation to the body of the guide part. From this gap the cable can be pushed into the guide part by bending the cable in the direction of the gap. The transverse distance between the utmost tips of tongues 15 and 16 is essentially smaller than the diameter of the cable to be installed. Owing to the chamfer, the tongues keep the cable inside the guide part and thus prevent the cables from moving out of their position. As can be seen in the cross-sectional view of Figure 6, the tongue edges are rounded off, so that the cable will not be damaged when mounted inside the guide part. On the open side of the guide part there is the necessary number of tongues essentially matched together, in the case of Figure 5 three pairs, suitably spaced from one another.

Indentations 17, 18, 19 and 20 arranged for the fastening means can be seen in Figure 5 on the straight part 13 of the guide part. Corresponding indentations are also arranged on the opposite side of the guide part which is not seen in Figure 5. Thus there are such indentations for each fastening means in every corner of the body. In Figure 5, indentations 19 and 20 are essentially longer in the longitudinal direction of the guide part than the width of fastening means in the cable route direction, whereby the distance between fastening means can be adjusted to suit the spacing of holes in the mounting plate. When desired, the possibility of longitudinal adjustment may also be arranged for more than one fastening means.

Figure 6 is a cross-sectional view of guide part 10 taken along line A-A in Figure 5. The structure of the guide part is made open at one side and is essentially U-shaped in cross-section. All sides are essentially of the same length. A solid guide part according to another embodiment of the invention is made with a square cross-section. As was noted earlier, the edges of tongues 15 and 16 are rounded off in order to avoid any damage to cables. Figure 6 also illustrates how indentations 17, 18, 27 and 28 arranged for the fastening means are located in every corner of the cross-section. On the one hand, the indentations fasten fastening means 11 and 12 to the body of guide part 10, and, on the other hand, they function as locking means to lock the rotational movement of guide part 10.

Figure 7 shows one fastening means 11 of the cable guide as seen from one end. The holder part 41 for the fastening means which is fastened around guide part 10 is essentially circular in cross-section but with an open periphery. Notches 44 are arranged on the inner periphery of holder part 41 to lock any rotation of the guide part. Locking is brought about through the joint effect of indentations 17, 18, 27 and 28 in the guide part and notches 44 of the fastening means. When the indentations of the guide part and the notches of the fastening means are located in a way to match one another, these locking means will keep the cable guide in its position and will thus prevent the guide part 10 from rotating by itself in relation to its longitudinal axis. Figure 7 shows seven notches 44 to be used for rotating the cable guide and for locking it in steps of 45 degrees into eight different positions. By changing the number of notches, rotation and locking can be arranged in steps of desired size. As can be seen from the perspective view of fastening means in Figure 8, notches 44 are of a length equal to the entire width of the fastening means in the cable route direction.

In the snap connection shown in Figures 7 and 8, which is known as such, there is a groove 34 in the end of pin 33 which allows the pin to flex when being pushed into its mounting hole. The pin snaps into position so that the widened part 35 of pin 33 goes to the opposite side of the mounting surface, at the same time locking fastening means 11 in its position. The fastening means can be removed from its mounting base by pressing tips 36 of pin 33 towards each other and by pulling the fastening means out of its mounting hole.

As was explained above in connection with the description of Figure 3, the downward-curving flexible pressing vanes 23 of the fastening means allow firm fastening on fastening bases of varying thickness. When the fastening means is pushed into its mounting hole, tips 46 of the pressing vanes will be pressed against the fastening base and they will flex until the tip snaps into position. In fastening means 11 in its mounted state, the widened part 35 of pin 33 and pressing vanes 46 press the fastening means to be firmly fastened to the mounting base. Depending on the thickness of the fastening base, pressing vanes 23 will flex as much as required.

The cable guide according to the invention is suitable for mounting different cables or wires, especially for mounting an optical fiber. The cable guide is preferably made of a plastic material due to low costs of manufacture and easy processibility.

The drawings and their related explanation are intended only to illustrate the idea of the invention. The details of the cable guide according to the invention may vary within the scope of the claims. Although the invention has been explained above mainly in connection with fastening means of essentially circular cross-section with an open periphery and in connection with a guide part of an essentially U-shaped cross-section, the cable guide according to the invention may be embodied also with matching parts of other shapes which allow the guide part to rotate around its axis, e.g. with open fastening means of an essentially square crass-section and with a guide part of an essentially circular cross-section. The locking means described above may also be replaced with any other solution providing a corresponding function, e.g. so that the guide part is provided with indentations and the fastening means are provided with raised parts. The cable guide according to the invention may also be implemented without any separate locking means, e.g. by providing a sufficient friction between the fastening means and the guide part, so that the guide part will not rotate freely in relation to its axis, but it can still be rotated. In addition, instead of the structure presented above, which is made with two fastening means, any desired number of fastening means may of course be placed on the straight part of the guide part.

## Claims

1. Cable guide for telecommunications cables, which cable guide consists of a guide part (10) and of at least one fastening means (11, 12) for fastening the cable guide to a base, wherein the guide part (10) consists of a straight part (13) and of a curved part (14), the radius of curvature of which is bigger than or equal to the minimum bending radius of the cable, and the guide part (10), supported by the fastening means (11, 12), is arranged to be rotatable in relation to the longitudinal axis of the straight part (13), **characterized in that** the guide part (10) is pre-cast and that the fastening means (11, 12) are mounted on the straight part (13) and that there are locking means in the cable guide to lock any rotation of the guide part (10).

2. Cable guide according to claim 1, **characterized in that** the locking means comprise first locking parts (17 - 20, 27, 28) in the straight part (13) of the guide part and second locking parts (44), co-operative with the first locking parts, on the inner surface of a holder part (41) of the fastening means.

3. Cable guide according to claim 2, **characterized in that** at least a part of the said first locking parts (19, 20) is essentially wider in the longitudinal direction of the guide part (10) than the width of the fastening means (11, 12) in the cable route direction.

4. Cable guide according to claim 2 or 3, **characterized in that** the said first and second locking parts are formed with deformations made in the surface.

5. Cable guide according to claim 1, **characterized in that** one longitudinal side of the guide part (10) is open and that the said side is provided with chamfered tongues (15, 16) with a gap of uniform size in between for pushing the cable through the gap and into the guide part.

## Patentansprüche

1. Kabelführung für Telekommunikationskabel, wobei die Kabelführung aus einem Führungsteil (10) und mindestens einer Befestigungseinrichtung (11, 12) zum Befestigen der Kabelführung an einer Basis besteht, wobei das Führungsteil (10) aus einem geraden Teil (13) und einem gekrümmten Teil (14) besteht, dessen Krümmungsradius größer als oder gleich einem minimalen Biegeradius des Kabels ist, und das Führungsteil (10), das durch die Befestigungseinrichtung (11, 12) abgestützt ist, in Bezug auf die Längsachse des geraden Teils (13) drehbar angeordnet ist,
**dadurch gekennzeichnet, dass**
das Führungsteil (10) vorgegossen ist und dass die Befestigungseinrichtung (11, 12) an das gerade Teil (13) montiert ist und dass in der Kabelführung eine Sperreinrichtung vorhanden ist, um eine Drehung des Führungsteils (10) zu sperren.

2. Kabelführung nach Anspruch 1,
**dadurch gekennzeichnet, dass**
die Sperreinrichtung erste Sperrteile (17 - 20, 27, 28) in dem geraden Teil (13) des Führungsteils und zweite Sperrteile (44), die mit den ersten Sperrteilen zusammenwirkend sind, auf der inneren Fläche eines Halterteils (41) der Befestigungseinrichtung aufweist.

3. Kabelführung nach Anspruch 2,
**dadurch gekennzeichnet, dass**
mindestens ein Teil der ersten Sperrteile (19, 20) in die Längsrichtung des Führungsteils (10) erheblich breiter als die Breite der Befestigungseinrichtung (11, 12) in die Kabelverlaufsrichtung ist.

4. Kabelführung nach Anspruch 2 oder 3,
**dadurch gekennzeichnet, dass**
die ersten und die zweiten Sperrteile mit Verformungen ausgebildet sind, die in der Fläche ausgeführt sind.

5. Kabelführung nach Anspruch 1,
**dadurch gekennzeichnet, dass**
eine Längsseite des Führungsteils (10) offen ist und dass die Seite mit abgeschrägten Zungen (15, 16) mit einem Spalt von einer gleichförmigen Größe dazwischen zum Drücken des Kabels durch den Spalt und in das Führungsteil vorgesehen ist.

## Revendications

1. Guide câble pour des câbles de télécommunication, lequel guide câble consiste en une partie de guidage (10) et en au moins un moyen de fixation (11, 12) pour fixer le guide câble à une base, dans lequel la partie de guidage (10) consiste en une partie droite (13) et en une partie incurvée (14), dont le rayon de courbure est supérieur ou égal au rayon de pliage minimum du câble, et la partie de guidage (10), supportée par les moyens de fixation (11, 12), est agencée pour pouvoir tourner par rapport à l'axe longitudinal de la partie droite (13), **caractérisé en ce que** la partie de guidage (10) est moulée et **en ce que** les moyens de fixation (11, 12) sont montés sur la partie droite (13) et **en ce que** des moyens de blocage sont prévus dans le guide câble pour empêcher toute rotation de la partie de guidage (10).

2. Guide câble selon la revendication 1, **caractérisé en ce que** les moyens de blocage comprennent des premières parties de blocage (17 - 20, 27, 28) dans la partie droite (13) de la partie de guidage et des deuxièmes parties de blocage (44), qui coopèrent avec les premières parties de blocage, sur la surface intérieure d'une partie de maintien (41) des moyens de fixation.

3. Guide câble selon la-revendication 2, **caractérisé en ce qu'**au moins une partie desdites premières parties de blocage (19, 20) est essentiellement plus large dans la direction longitudinale de la partie de guidage (10) que la largeur des moyens de fixation (11, 12) dans la direction d'acheminement des câbles.

4. Guide câble selon la revendication 2 ou 3, **caractérisé en ce que** lesdites première et deuxième parties de blocage comportent des déformations réalisées dans la surface.

5. Guide câble selon la revendication 1, **caractérisé en ce qu'**un côté longitudinal de la partie de guidage (10) est ouvert et **en ce que** ledit côté est pourvu de languettes chanfreinées (15, 16) avec un espace de dimension uniforme entre elles pour pousser le câble à travers l'espace et dans la partie de guidage.
